# EUROPEAN PATENT APPLICATION

(11) **EP 1 921 698 A2**
(43) Date of publication of application: **14.05.2008**
(21) Application number: 06019347.1
(22) Date of filing: 15.09.2006
(51) Int. Cl.: H01M 4/04, H01M 4/58, C01B 25/30, C01B 25/45

(54) **Method of processing active materials for use in secondary electrochemical cells**

(30) Priority: 13.09.2006 US 825525 P
(71) Applicant: VALENCE TECHNOLOGY, INC., Las Vegas, NV 89119 (US)
(72) Inventor: Dong, Ming, Jiangsu Province 215123 (CN)
(74) Representative: Beckmann, Claus

(57) **Abstract**

The present invention provides a method for the processing of particles of metal phosphates or particles of mixed metal phosphates and in particular lithiated metal phosphates and mixed metal phosphates. The processing occurs, for example using a mechanofusion system as depicted in Figures 1 and 2. In general, the powder materials are placed in a rotary container and are subjected to centrifugal force and securely pressed against the wall of the container. The material then undergoes strong compression and shearing forces when it is trapped between the wall of the container and the inner piece of the rotor with a different curvature (Figure 2). Particles of the material are brought together with such force that they adhere to one another. In the mechanofusion system, as indicated in Figure 2, the powder material is delivered through slits on the rotary walls. It is carried up above the rotors by the rotor-mounted circulating blades. Subsequently, the material returns again to the rotors where it is are subjected to strong compression and shearing forces from the inner pieces of the rotor. This cycle of both three-dimensional circulation and effective compression/shearing of the powder material is repeated at high speeds, thereby forming it into a composite electroactive material (powder).

## Description

### FIELD OF THE INVENTION

The present invention relates to the processing of electroactive materials which are useful in producing electrodes and batteries. The electroactive materials are subjected to a mechanofusion process by which mechanical energy is applied to the electroactive particles which were produced by a carbothermal reduction process. This mechanofusion processing induces a mechano-chemical reaction whereby new electroactive particles are produced.

### BACKGROUND OF THE INVENTION

A wide variety of electrochemical cells or batteries are known in the art. In general, batteries are devices that convert chemical energy into electrical energy, by means of an electrochemical oxidation-reduction reaction. Batteries are used in a wide variety of applications, particularly as a power source for devices that cannot practicably be powered by centralized power generation sources (e.g., by commercial power plants using utility transition lines).

Batteries can generally be described as comprising three components: an anode that contains a material that is oxidized (yields electrons) during discharge of the battery; a cathode that contains a material that is reduced (accepts electrons) during discharge of the battery; and an electrolyte that provides for transfer of ions between the cathode and anode. Batteries can be more specifically characterized by the specific materials that make up each of these three components. Selection of these components can yield batteries having specific voltage and discharge characteristics that can be optimized for particular applications.

The electrodes of such batteries generally include an electroactive material. Recently a class of transition metal phosphates and mixed metal phosphates have been developed for use as electroactive material. These transition metal phosphates and mixed metal phosphates are insertion based compounds and allow great flexibility in the design of lithium ion batteries. These phosphate compounds have a crystal lattice structure or framework from which ions, such as lithium ions, can be extracted and subsequently reinserted and/or from which ions such as lithium ions can be inserted or intercalated and subsequently extracted.

A class of such materials is disclosed in U.S. 6,528,033 B1 (Barker et al.). The compounds therein are of the general formula LiₐMI_{b}MII_{c}(PO₄)_{d} wherein MI and MII are the same or different. MI is a metal selected from the group consisting of Fe, Co, Ni, Mn, Cu, V, Sn, Cr and mixtures thereof. MII is optionally present, but when present is a metal selected from the group consisting of Mg, Ca, Zn, Sr, Pb, Cd, Sn, Ba, Be and mixtures thereof. More specific examples of such compounds include compounds wherein MI is vanadium and more specifically includes Li₃V₂(PO₄)₃. U.S. 6,528,033 B1 (Barker et al.) further discloses useful electroactive materials of the formula LiFe₁₋ₓMgₓPO₄.

In general, such an electroactive material must exhibit a low free energy of reaction with lithium, be able to intercalate a large quantity of lithium, maintain its lattice structure upon insertion and extraction of lithium, allow rapid diffusion of lithium, afford good electrical conductivity, not be significantly soluble in the electrolyte system of the battery, and be readily and economically produced. However, many of the electroactive materials known in the art lack one or more of these characteristics.

Transition metal phosphates are typically synthesized in a solid state reaction. Starting materials in particle form are mixed to produce an intimate mixture of particles. When heat is applied to effect reaction, the solid particles react with one another through a variety of surface reactions accompanied by diffusion of reactive materials into and out of various particles in the mixture. For this reason, it is preferred to mix particle mixtures with as close a degree of contact as possible between the particles together with a desirable particle size. To accomplish this, the particle mixtures are typically prepared by methods such as ball milling or physical mixing.

For instance a lithium metal phosphate made, for example, from LiH₂PO₄ and a metal oxide via high calcination requires that starting materials be fine size particles. Intensive mixing is needed to insure complete conversion of the starting materials to the desired end product. Thus, it would be desirable and beneficial to have a process for preparing such intercalation materials more efficiently, at reduced cost and with less consumption of production space and reduction of production time. The inventors of the present invention have now found a reproducible, efficient and economical method for producing high density, high purity electroactive materials for use in the production of electrodes and in particular in the production of cathodes.

### SUMMARY OF THE INVENTION

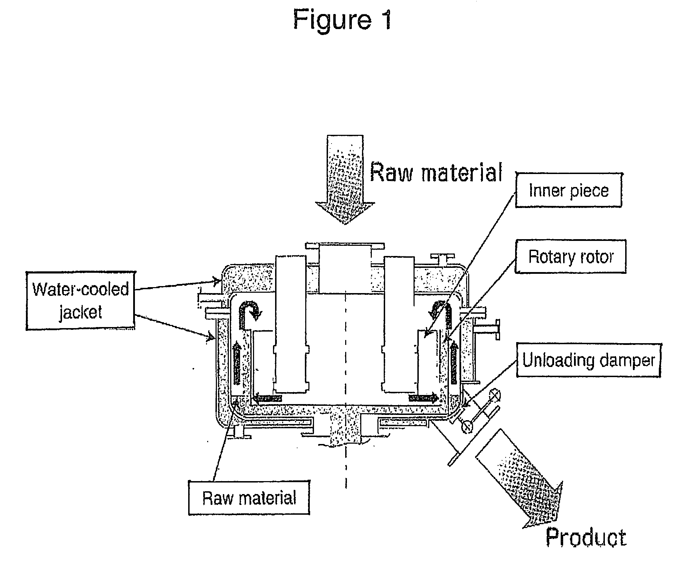

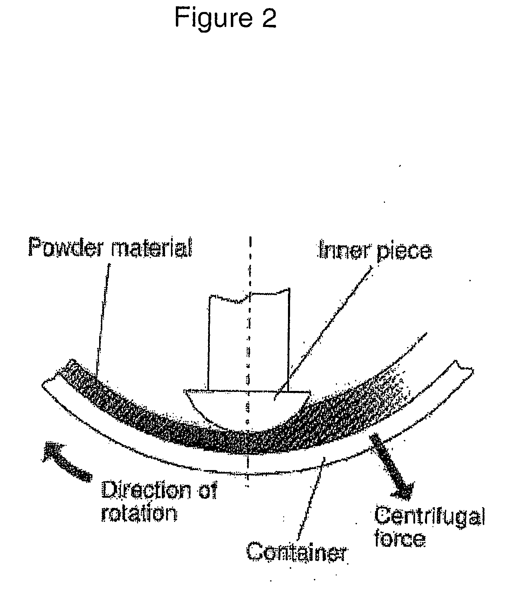

The present invention provides a method for the processing of particles of metal phosphates or particles of mixed metal phosphates and in particular lithiated metal phosphates and mixed metal phosphates. The processing occurs, for example using a mechanofusion system as depicted in Figures 1 and 2. In general, the powder materials are placed in a rotary container and are subjected to centrifugal force and securely pressed against the wall of the container. The material then undergoes strong compression and shearing forces when it is trapped between the wall of the container and the inner piece of the rotor with a different curvature (Figure 2). Particles of the material are brought together with such force that they adhere to one another. In the mechanofusion system, as indicated in Figure 2, the powder material is delivered through slits on the rotary walls. It is carried up above the rotors by the rotor-mounted circulating blades. Subsequently, the material returns again to the rotors where it is are subjected to strong compression and shearing forces from the inner pieces of the rotor. This cycle of both three-dimensional circulation and effective compression/shearing of the powder material is repeated at high speeds, thereby forming it into a composite electroactive material (powder).

This process improves the physical characteristics of as-synthesized electroactive materials. It tends to fuse the smaller particles to the outsides of the larger ones, and the composite particles thus produced tend to be spherical in shape. Because the finer particles consist of a relatively higher amount of carbon, this fusing action also tends to leave a carbon-rich exterior on the composite particles. The powder resulting from this process has high density, uniform particle size and spherical particles with carbon enriched surfaces. Mechanofusion treatment improves the electrode-forming properties of the electroactive material, such that uniform, high density, high conductivity electrodes may be formed without the problems associated with excessive levels of fine particles or nonuniform particles. This process eliminates the need for intensive, time consuming, price increasing and space consuming steps of mulling and pelletizing needed in other commercial processes for preparing metal phosphate and mixed metal phosphate compounds.

### BRIEF DESCRIPTION OF THE DRAWINGS

Figure 1 shows a typical mechanofusion mill wherein powders can are subjected to compressive and shearing forces.

Figure 2 shows the inside rotor where the powders are processed in the mechanofusion mill of Figure 1.

Figure 3 shows a scanning electron microscope (SEM) photograph of the porous powder produced by the wet ball milling method of Example 1 .

Figure 4 shows a SEM photograph of the dense powder produced after streamlining the wetball milling process and subjecting the porous powder to mechanofusion (See Example 3).

Figure 5 shows a SEM photograph of the rough/porous film produced with the porous powder produced by the method of Example 1 enlarged 100X.

Figure 6 shows a SEM photograph of the smooth/dense film produced with the powder subjected to mechanofusion as in example 3 enlarged 100X.

Figure 7 shows a SEM photograph of the rough/porous film produced with the porous powder produced by the method of Example 1 enlarged 1000X.

Figure 8 shows a SEM photograph of the smooth/dense film produced with the powder subjected to mechanofusion as in example 3 enlarged 1000X.

Figure 9 shows the capacity vs. voltage of a coin cell produced using the smooth/dense films containing the mechanofusion processed powder as the electroactive material.

### DETAILED DESCRIPTION OF THE INVENTION

Specific benefits and embodiments of the present invention are apparent from the detailed description set forth herein below. It should be understood, however, that the detailed description and specific examples, while indicating embodiments among those preferred, are intended for purposes of illustration only and are not intended to limit the scope of the invention.

A wide variety of commercially useful electroactive active materials are disclosed and may be made by the carbothermal processes described in U.S. 6,528,033; U.S. 6,716,372; U.S. 6,702,961; U.S. 6,913,855; U.S.6,730,281 and U.S. 7,060,206. Electroactive material are materials which find use in the manufacture of electrodes, namely, cathodes and anodes. Such cathodes and anodes are then used in the production of electrochemical cells. In general, the useful electroactive materials are prepared by mixing a source of metal ion, a source of alkali metal ion, a source of phosphate, a source of carbon and optionally a source of a second metal ion. Such mixture is then heated in an inert atmosphere. For example, it has been disclosed that Life₁₋ₓMgₓPO₄ (lithium iron magnesium phosphate) can be prepared by mixing the reactants LiH₂PO₄, Fe₂O₃, Mg(OH)₂ and carbon and heating said reaction mixture in an inert atmosphere.

It is further disclosed that Li₃V₂(PO₄)₃ (lithium vanadium phosphate can be prepared by ball milling V₂O₅, Li₂CO₃, (NH₄)₂HPO₄ and carbon and then pelletizing the resulting powder. The pellet is then heated to 300°C to remove CO₂ from the LiCO₃ and to remove the NH₂. The pellet so reacted is then powderized and repelletized. The new pellet is then heated at 850°C for 8 hours to produce the desired electrochemically active product.

In general, on a commercial scale, the precursor compounds, such as a lithium compound, a phosphate compound, a metal compound and carbon are measured and wet ball mixed. The reaction mixture is then spray dried by commercially known spray drying methods. The spray dried mixture is then mulled and pelletized. The pellet is then fired to form the electroactive material in its first form. This product is then milled and sieved to give the electroactive materials in a more desirable form for producing electrodes. Such products produced on a small scale have not always provided an optimal electroactive material for producing electrodes at a commercial scale.

It has now been found that processing the electroactive material in its first form in a mechanfusion system can produce the electroactive material in a more desirable form. By more desirable is meant better purity, higher tap density, uniform particle size and the like. Beneficially, it has also been found that such mechanofusion processing can eliminate the pelletizing and sieving processes which were originally performed on the electroactive material in its first form.

Hence, for example, on a commercial scale, the precursor compounds, such as a lithium compound, a phosphate compound, a metal compound, carbon and optionally a second metal compound are measured and wet ball mixed. The reaction mixture is then spray dried by commercially known spray drying methods, The spray dried mixture is then fired (heated) to form the electroactive product in its first form. This product is then milled at least one or more times and then subjected to the mechanofusion process to give a preferred and desirable electroactive material. Such electroactive materials are then useful for preparing electrode films for use in electrochemical cells.

A mechanofusion process involves subjecting one or more powders (for example lithium iron magnesium phosphate and carbon) to intense shearing and compression forces which generate sufficient heat energy to fuse the powder particles together. This process may be used to fuse particles of one material onto other particles of the same material, or to fuse particles of one material onto a different material, so as to combine, for example, a carbonaceous material with a base material such as lithium iron magnesium phosphate.. The final electroactive powder has high density and uniform particle size and may be used to form high quality electrodes.

Without being limited thereby, it is believed that when a compressive force and a shearing force are applied to combine the carbonaceous material and a metal phosphate or mixed metal phosphate (base materials) that the base material and the carbonaceous material are brought into intimate contact with each other. It is believed that they are physically bonded to each other and to themselves by van der Waals forces, thereby forming the final electroactive materials in a desirable powder form.

Thus, in a preferred method the metal phosphates or mixed metal phosphates are first prepared by weighing and wet ball milling the precursor materials. The wet ball milled mixture is then spray dried and the spray dried material fired. The resulting electroactive material in its first form is then milled, at least once, and then processed in a mechanofusion type mixer capable of applying shear and compression forces to the particles (such as commercially available products of Hosokawa Micron Corporation). The operational conditions of such mixers are not specifically limited but usually the rotation speed is from about 800 rpm to about 3000 rpm and more preferably from about 900 rpm to about 2650 rpm. The mixing time likewise is not specifically limited but typically is about 5 minutes to about 90 minutes and more preferably is from about 20 minutes to about 30 minutes. A more detailed description of a mechanofusion process and process parameters can be found in U.S. 5,081,072 (Hosokawa et al.), hereby incorporated by reference.

It is believed that such process would be beneficial for producing, on a commercial scale, for electroactive materials ("electrode active materials") comprising at least lithium or other alkali metals, a transition metal and a phosphate or similar moiety. Such electrode active materials include those of the nominal general formula AₐM_{b}(XY₄)_{c}Z_{d}, wherein a, b and c are greater than zero and d is greater than or equal to zero. (As used herein, the term "include," and its variants, is intended to be non-limiting, such that recitation of items in a list is not to the exclusion of other like items that may also be useful in the materials, compositions, devices and methods of this invention).

A is selected from the group consisting of Li (lithium), Na (sodium), K (potassium), and mixtures thereof. In a preferred embodiment, A is Li, or a mixture of Li with Na, a mixture of Li with K, or a mixture of Li, Na and K. In another preferred embodiment, A is Na, or a mixture of Na with K. Preferably "a" is from about 0.1 to about 6, more preferably from about 0.2 to about 6. Where c = 1, a is preferably from about 0.1 to about 3, preferably from about 0.2 to about 2. In a preferred embodiment, where c = 1, a is less than about 1. In another preferred embodiment, where c = 1, a is about 2. Where c = 2, a is preferably from about 0.1 to about 6, preferably from about 1 to about 6. Where c = 3, a is preferably from about 0.1 to about 6, preferably from about 2 to about 6, preferably from about 3 to about 6.

M comprises one or more metals, comprising at least one transition metal capable of undergoing oxidation to a higher valence state. In a preferred embodiment, removal of alkali metal from the electrode active material is accompanied by a change in oxidation state of at least one of the metals comprising M. The amount of said metal that is available for oxidation in the electrode active material determines the amount of alkali metal that may be removed. Such concepts are, in general application, well known in the art, e.g., as disclosed in U.S. Patent 4,477,541, Fraioli, issued October 16, 1984; and U.S. Patent 6,136,472, Barker, et al., issued October 24, 2000, both of which are hereby incorporated by reference.

M may be, in general, a metal or other element, selected from the group consisting of elements from Groups 2 - 14 of the Periodic Table. As referred to herein, "Group" refers to the Group numbers (i.e., columns) of the Periodic Table as defined in the current IUPAC Periodic Table. See, e.g., U.S. Patent 6,136,472, Barker et al., issued October 24, 2000, hereby incorporated by reference. Also as referred to herein, "transition metal" will refer to elements of Groups 4-11 of the Periodic Table, while "non-transition metal" will refer to elements from Groups 2, 3, 12, 13, or 14 of the Periodic Table, excluding C and Si, and to Sb, Bi, Te, and Po from Groups 15 and 16.

In a preferred embodiment, M comprises one or more transition metals from Groups 4 to 11. In another embodiment, M further comprises one or more non-transition metals. In preferred embodiments, the non-transition metals include those that have a +2 or a +3 oxidation state. Thus, M may be represented by MIₓ MII₁₋ₓ, where MI comprises a transition metal and MII a non-transition metal, and x is greater than zero. Preferably, x is greater than or equal to about 0.5, more preferably greater than or equal to about 0.8, and more preferably greater than or equal to about 0.9. Preferred transition metals include the first row transition series (the 4th Period of the Periodic Table), selected from the group consisting of Ti, V, Cr, Mn, Fe, Co, Ni, Cu, and mixtures thereof. Particularly preferred transition metals include Fe, Co, Mn, Cu, V, Cr, and mixtures thereof. Mixtures of transition metals may also be used. Although, a variety of oxidation states for such transition metals are available, in some embodiments it is preferred that the transition metals have a +2 oxidation state. In other embodiments, the transition metals have a +3 oxidation state. In a preferred embodiment, the transition metal includes Fe.

M may also comprise non-transition metals and metalloids. Among such elements are those selected from the group consisting of Group 2 elements, particularly Be (Beryllium), Mg (Magnesium), Ca (Calcium), Sr (Strontium), Ba (Barium); Group 3 elements, particularly Sc (Scandium), Y (Yttrium), and the lanthanides, particularly La (Lanthanum), Ce (Cerium), Pr (Praseodymium), Nd (Neodymium), Sm (Samarium); Group 12 elements, particularly Zn (zinc) and Cd (cadmium); Group 13 elements, particularly B (Boron), Al (Aluminum), Ga (Gallium), In (Indium), TI (Thallium); Group 14 elements, particularly Si (Silicon), Ge (Germanium), Sn (Tin), and Pb (Lead); Group 15 elements, particularly As (Arsenic), Sb (Antimony), and Bi (Bismuth); Group 16 elements, particularly Te (Tellurium); and mixtures thereof. Preferred non-transition metals include the Group 2 elements, Group 12 elements, Group 13 elements, and Group 14 elements. Particularly preferred non-transition metals include those selected from the group consisting of Mg, Ca, Zn, Sr, Pb, Cd, Sn, Ba, Be, Al, and mixtures thereof. Particularly preferred non-transition metals are selected from the group consisting of Mg, Ca, Zn, Ba, Al, and mixtures thereof. More preferably, the non-transition metal is Mg.

As further discussed herein, "b" is selected so as to maintain electroneutrality of the electrode active material. Preferably, b may range from about 0.8 to about 3, more preferably from about 0.8 to 2. In a preferred embodiment, where c = 1, b is from about 1 to about 2, preferably about 1. In another preferred embodiment, where c = 2, b is from about 2 to about 3, preferably about 2.

XY₄ is selected from the group consisting of X'O₄₋ₓY'ₓ, X'O_{4-y}Y'_{2y}, X"S₄, and mixtures thereof, where X' is P (phosphorus), As (arsenic), Sb (antimony), Si (silicon), Ge (germanium), V (vanadium), S (sulfur), or mixtures thereof; X" is P, As, Sb, Si, V, Ge or mixtures thereof. In a preferred embodiment, X' and X" are, respectively, selected from the group consisting of P, Si, and mixtures thereof. In a particularly preferred embodiment, X' and X" are P. Y' is halogen (preferably fluorine), N, or S. Representative examples of moieties XY₄ include, without limitation, phosphate, silicate, sulfate, and arsenate. Other non-limiting examples include germanate, antimonate, and vanadate, as well as sulfur containing analogs of any of the foregoing.

In a preferred embodiment 0 < x < 3; and 0 < y < 4, such that a portion of the oxygen (O) in the XY₄ moiety is substituted with halogen, S. or N. In another preferred embodiment, x and y are 0. In a particularly preferred embodiment XY₄ is X'O₄, where X' is preferably P or Si, more preferably P.

Z is OH, halogen, or mixtures thereof. In a preferred embodiment, Z is selected from the group consisting of OH (hydroxyl), F (fluorine), Cl (chlorine), Br (bromine) and mixtures thereof. In a preferred embodiment, Z is OH. In another preferred embodiment, Z is F, or mixtures of F with OH, Cl, or Br. In a preferred embodiment, d = 0. In another preferred embodiment, d is > 0, preferably from about 0.1 to about 6, more preferably from about 0.2 to about 6. In such embodiments where d is > 0, where c = 1, d is preferably from about 0.1 to about 3, preferably from about 0.2 to about 2. In a preferred embodiment, where c=1, d is about 1. Where c = 2, d is preferably from about 0.1 to about 6, preferably from about 1 to about 6. Where c = 3, d is preferably from about 0.1 to about 6, preferably from about 2 to about 6, preferably from about 3 to about 6.

The composition of M, X, Y, and Z, and the values of a, b, c, d, x and y, are selected so as to maintain electroneutrality of the electrode active material. As referred to herein "electroneutrality" is the state of the electrode active material wherein the sum of the positively charged species (e.g., M and X) in the material is equal to the sum of the negatively charged species (e.g., Y and Z) in the material. Preferably, the XY₄ moieties are comprised to be, as a unit moiety, an anion having a charge of -2, -3, or -4, depending on the selection of X. When XY₄ represents a combination of groups, the negative charge contributed by the XY₄ groups may take on non-integer values.

In one aspect, the electroactive materials are lithium metal phosphates of general formula

LiₐM_{b}PO₄

with M as defined above. In a preferred embodiment, a is from about 0.3 to about 1.2, preferably from about 0.8 to 1.2, and b is about 0.8 to about 1.2. In one embodiment, a and b are both about 1 When b is about 1, the active materials may be written as LiₐMIₓ MII₁₋ₓ PO₄, where x is greater than zero. MI comprises a transition metal, preferably V, Cr, Mn, Fe, Co, Ni, Mo or combinations thereof, and more preferably Fe. MII comprises a non-transition metal, preferably Be, Mg, Ca, Sr, Ba, Zn, or combinations thereof, and more preferably Mg. In one preferred embodiment, MI is Fe, MII is Mg, and x is greater than 0.5. In another embodiment, x is greater than or equal about 0.8; in yet another embodiment, x is greater than or equal about 0.9. Preferably, x is less than or equal to about 0.95.

Other preferred embodiments of phosphate materials that can be processed by the present mechanofusion method can be represented by the formula

AₐM_{b}(PO₄)_{c}Z_{d}

wherein A is an alkali metal or mixture of alkali metals, M comprises at least one transition metal capable of undergoing oxidation to a higher oxidation state than in the general formula, Z is selected from the group consisting of halogen, hydroxide, and combinations thereof, a, b, and c are greater than zero and d is zero or greater.

In one embodiment, the electroactive material comprises a compound of the formula

LiₐM_{b}(PO₄)Z_{d},

wherein
(a) 0.1 < a ≤ 4;
(b) M is M'₁₋ₘM"ₘ, where M' is at least one transition metal from Groups 4 to 11 of the Periodic Table; M" is at least one element which is from Group 2, 12, 13, or 14 of the Periodic Table, 0 < m < 1, and 1 ≤ b ≤ 3; and
(c) Z comprises halogen, and 0 ≤ d ≤ 4, preferably 0.1 ≤ d ≤ 4; wherein M, Z, a, b, and d are selected so as to maintain electroneutrality of said compound Preferably, M' is selected from the group consisting of Fe, Co, Ni, Mn, Cu, V, Zr, Ti, Cr, and mixtures thereof; more preferably M' is selected from the group consisting of Fe, Co, Mn, Cu, V, Cr, and mixtures thereof. Preferably, M" is selected from the group consisting of Mg, Ca, Zn, Sr, Pb, Cd, Sn, Ba, Be, Al, and mixtures thereof; more preferably M" is selected from the group consisting of Mg, Ca, Zn, Ba, Al, and mixtures thereof. Preferably Z comprises F.

Another preferred phosphate compound comprises a compound of the formula

A₂M(PO₄)Z_{d},

wherein
(a) A is selected from the group consisting of Li, Na, K, and mixtures thereof;
(b) M is M'_{1-b}M"_{b}, where M' is at least one transition metal from Groups 4 to 11 of the Periodic Table; and M" is at least one element which is from Group 2, 3, 12, 13, or 14 of the Periodic Table, and 0 < b < 1; and
(c) Z comprises halogen, and 0 < d < 2, preferably 0.1 < d < 2; and wherein M, Z, b, and d are selected so as to maintain electroneutrality of said compound.

Preferably A is Li, or mixtures of Li with Na, K, or mixtures of Na and K. Preferably, M' is selected from the group consisting of Fe, Co, Mn, Cu, V, Zr, Ti, Cr, and mixtures thereof; more preferably M' is selected from the group consisting of Fe, Co, Mn, Cu, V, Cr, and mixtures thereof. Preferably, M" is selected from the group consisting of Mg, Ca, Zn, Sr, Pb, Cd, Sn, Ba, Be, Al, and mixtures thereof; more preferably, M" is selected from the group consisting of Mg, Ca, Zn, Ba, Al, and mixtures thereof. Preferably, Z comprises F. In a preferred embodiment M' comprises Fe, and M" is Mg. A particularly preferred embodiment is LiFe₁₋ₓMgₓPO₄ and Li₂Fe₁₋ₓMgₓPO₄F. Preferred electrode active materials include for example LiFe_{.95}Mg_{.05}PO₄

Materials such as those above and others can be made by a process comprising the step of wet ball milling heating a particulate precursor composition in a solvent. The particulate precursor composition is provided in the form of particles, wherein the particles have an average size of less than 100 micrometers, and wherein at least a major fraction of the particles contain at least one compound that is a source of alkali metal and at least one compound that is a source of transition metal. Alternatively, the precursor composition particles further comprise a carbonaceous material. In a preferred embodiment, the particle average diameter is less than 50 micrometers. Preferred transition metal compounds include those of vanadium, chromium, manganese, iron, cobalt, nickel, molybdenum, titanium, and combinations thereof, while preferred alkali metal compounds include those of lithium. In a preferred embodiment, the particles further comprise at least one compound that is a source of an anion selected from the group consisting of phosphate, hydrogen phosphate, dihydrogen phosphate, and mixtures thereof.

As discussed above, electroactive materials are prepared by spray drying the powder precursor composition, mulling the spray dried composition and then heating for a time and at a temperature sufficient to form an electroactive reaction product in a first form. The electroactive reaction product may in general be used directly as the active material in the electrodes and rechargeable batteries of the invention. However, it has now been found according to the present invention that subjecting such reaction product to mechanofusion processing results in a beneficial and more desirable electroactive reaction product while eliminating some processing steps, improving processing time and efficiency and thereby simultaneously reducing costs.

The powdered precursor composition is conveniently prepared by spray drying a slurry. As used here, slurry refers to a composition having a liquid phase and a solid phase. The liquid phase may contain one or more dissolved solids. The solid phase is dispersed or suspended in the liquid phase in such a way that the composition maintains a uniform structure or stable suspension for a time period sufficient for it to be subsequently used. In the present process, the slurry is to remain stable for a time sufficient for it to be used in the spray drying process.

The slurry is a physical mixture of dissolved and non-dissolved solids, distinguishing it from a true solution. As a physical mixture, the slurry can be separated into its liquid and solid components by a variety of physical processes such as centrifugation and filtration. In some embodiments, it may be susceptible to separating upon standing by the working of gravity on the solid particles in the solid phase. The slurries are preferably characterized in that when separation occurs such as by any of the mechanisms above, they can be readily re-suspended or re-dispersed by agitation.

In practice, the slurry is preferably a stable, essentially uniform composition suitable for uses that take advantage of its uniform composition. An example of such a use, as described above, is spray drying. The stability of the slurry may be maintained by physical processes such as constant agitation, or alternatively it may be enhanced by the addition of other compounds or compositions which act as a dispersing agent or suspending agent as known in the art.

Slurries are prepared by combining a number of starting materials with a solvent. The solvent is preferably any liquid such as an organic liquid or water that will disperse or suspend the starting materials so that they may be used in a subsequent spray draying process. Examples of useful organic materials include without limitation ethanol, propanol, isopropanol, butanol, isobutanol, low molecular weight alkanes, low molecular weight ketones, and the like. A preferred solvent is water.

Slurries for preparing electroactive materials of general formulae given above are readily prepared according previously disclosed methods. According to the desired values of a, b, c, and d in the product, starting materials are chosen that contain "a" moles of alkali metal A from all sources, "b" moles of metals M from all sources, "c" moles of phosphate (or other XY₄ species) from all sources, and "d" moles of halide or hydroxide Z, again taking into account all sources. As discussed below, a particular starting material may be the source of more than one of the components A, M, XY₄, or Z. Alternatively, it is possible to run the reaction with an excess of one or more of the starting materials. In such a case, the stoichiometry of the product will be determined by the limiting reagent among the components A, M, XY₄, and Z. Because in such a case at least some of the starting materials will be present in the reaction product mixture, it is usually desirable to provide the starting materials in molar equivalent amounts.

Sources of alkali metal include any of a number of salts or ionic compounds of lithium, sodium or potassium. Lithium compounds are preferred. Preferably, the alkali metal source is provided in powder or particulate form. A wide range of such materials are well known in the field of inorganic chemistry. Non-limiting examples include the lithium, sodium, and/or potassium fluorides, chlorides, bromides, iodides, nitrates, nitrites, sulfates, hydrogen sulfates, sulfites, bisulfites, carbonates, bicarbonates, borates, phosphates, hydrogen ammonium phosphates, dihydrogen ammonium phosphates, silicates, antimonates, arsenates, germinates, oxides, acetates, oxalates, and the like. Hydrates of the above compounds may also be used, as well as mixtures. In particular, the mixtures may contain more than one alkali metal so that a mixed alkali metal active material will be produced in the reaction.

Sources of metals M include salts or compounds of any of the transition metals, alkaline earth metals, or lanthanide metals, as well as of non-transition metals such as aluminum, gallium, indium, thallium, tin, lead, and bismuth. The metal compounds include, without limitation, fluorides, chlorides, bromides, iodides, nitrates, nitrites, sulfates, hydrogen sulfates, sulfites, bisulfites, carbonates, bicarbonates, borates, phosphates, hydrogen ammonium phosphates, dihydrogen ammonium phosphates, silicates, antimonates, arsenates, germanates, oxides, hydroxides, acetates, oxalates, and the like. Hydrates may also be used, as well as mixtures of metals, as with the alkali metals, so that alkali metal mixed metal active materials are produced. The metal M in the starting material may have any oxidation state, depending the oxidation state required in the desired product and the oxidizing or reducing conditions contemplated in the process. The metal sources are chosen so that at least one metal in the final reaction product is capable of being in an oxidation state higher than it is in the reaction product.

Sources of the desired starting material anions such as the phosphates (and similar moieties), halides, and hydroxides include a number of salts or compounds containing positively charged cations in addition to the source of phosphate (or other XY4 species), halide, or hydroxide. Such cations include, without limitation, metal ions such as the alkali metals, alkaline metals, transition metals, or other non-transition metals, as well as complex cations such as ammonium or quaternary ammonium. The phosphate anion in such compounds may be phosphate, hydrogen ammonium phosphate, or dihydrogen ammonium phosphate. Hydrates of any of the above may be used, as can mixtures of the above.

Other sources of phosphate, silicate, sulfate, and other similar moieties include the acids, which are usually available in a liquid form as either the pure compound or a concentrated aqueous solution. A preferred phosphate source, for example, is concentrated orthophosphoric acid, available as approximately an 85% by weight solution in water.

A starting material may provide more than one of the components A, M, XY₄, and Z, as is evident in the list above. In various embodiments of the invention, starting materials are provided that combine, for example, the alkali metal and halide together, or the metal and the phosphate. Thus for example, lithium, sodium, or potassium fluoride may be combined with a metal phosphate such as vanadium phosphate or chromium phosphate, or with a mixture of metal compounds such as a metal phosphate and a metal hydroxide. In one embodiment, a starting material is provided that contains alkali metal, metal, and phosphate. There is complete flexibility to select starting materials containing any of the components of alkali metal A, metal M, phosphate (or other XY₄ moiety), and halide/hydroxide Z, depending on availability. Combinations of starting materials providing each of the components may also be used.

In general, any anion may be combined with the alkali metal cation to provide the alkali metal source starting material, or with the metal M cation to provide the metal M starting material. Likewise, any cation may be combined with the halide or hydroxide anion to provide the source of Z component starting material, and any cation may be used as counterion to the phosphate or similar XY4 component. It is preferred, however, to select starting materials with counterions that give rise to volatile by-products. Thus, it is desirable to choose ammonium salts, carbonates, oxides, hydroxides, and the like where possible. Starting materials with these counterions tend to form volatile by-products such as water, ammonia, and carbon dioxide, which can be readily removed from the reaction mixture.

In a preferred embodiment, LiH₂PO₄ or Li₂HPO₄ is used as starting material to prepare a precursor slurry of the invention. Not only does such a starting material provide a convenient source of both lithium and phosphate - two important constituents of the active materials - but they are highly soluble in water, a preferred solvent for making the slurries of the invention.

When the active material to be made is an alkali metal phosphate material as described above, it is preferred to use an soluble alkali metal dihydrogen phosphate as a starting material. A preferred alkali metal dihydrogen phosphate is lithium dihydrogen phosphate. Lithium dihydrogen phosphate may be added directly to the slurry as described above, or it may be formed by combining other of the starting materials. For example, in a first step H3PO4 and Li2CO3 or LiOH may be combined together to form a lithium dihydrogen phosphate solution. Thereafter, an insoluble transition metal oxide such as iron oxide may be added to form a slurry which is subsequently spray dried to form a powder precursor composition. Alternatively lithium carbonate or lithium hydroxide and an insoluble transition metal oxide may be combined in water to form a slurry to which phosphoric acid is subsequently added. A soluble lithium dihydrogen phosphate is formed in the liquid phase. Some iron phosphate may also be solubilized in the liquid phase. The solid phase contains unreacted transition metal oxide and any precipitating species. The slurry may also contain other soluble metals such as, without limitation, magnesium hydroxide.

As noted above, the slurries of the invention may also contain a carbonaceous compound. It is possible to use soluble carbonaceous compounds such as without limitation glycerol, starch, and a variety of sugars. Many useful carbonaceous compounds, however, are not soluble in water or other solvents. These insoluble carbonaceous materials include amorphous carbon, graphites, cokes, hydrocarbons, and the organic polymers noted above. In a preferred embodiment, effective dispersants are used along with insoluble carbonaceous material to form slurries of the invention.

Generally, dispersants are used in the invention to maintain in suspension the solid phase, which generally contains an insoluble metal compound (usually at least one insoluble transition metal compound), an insoluble carbonaceous material, or both. Suitable dispersants include those that are capable of interacting both with the liquid phase and the solid phase of the slurry to maintain a relatively stable dispersion or suspension. In general, dispersants will be those compounds or compositions having both a hydrophilic part and a hydrophobic part. Dispersants useful in industry and in forming the slurries of the invention are well known in the art and are selected from the group consisting of nonionic dispersants, anionic dispersants and cationic dispersants. Such materials are commercially available from a variety of sources.

Dispersants used in the invention are generally organic materials that can carbonize and form reducing carbon material when heated in a powdered precursor composition as discussed above. As such, they can supplement or substitute for other added sources of reducing carbon such as other organic precursor materials

The slurries of the invention are spray dried by conventional means to yield a powder precursor composition. The slurry is spray dried by atomizing the slurry to form droplets and contacting the droplets with a stream of gas at a temperature sufficient to evaporate at least a major portion by weight of the solvent used in the slurry. In one embodiment, air can be used to dry the slurries of the invention. In other embodiments, it may be preferable to use a less oxidizing or perhaps an inert gas or gas mixture. For example, an inert gas is preferred when the slurry being dried contains organic solvents. On the other hand, hot air may be suitable for drying aqueous slurries. In a preferred embodiment of the present invention, when a water based slurry is utilized hot air is used to dry the droplets.

Spray drying is preferably conducted using a variety of methods that cause atomization by forcing the slurry under pressure at a high degree of spin through a small orifice, including rotary atomizers, pressure nozzles, and air (or two-fluid) atomizers. The slurry is thereby dispersed into fine droplets. It is dried by a relatively large volume of hot gases sufficient to evaporate the volatile solvent, thereby providing very fine particles of a powdered precursor composition. The particles contain the precursor starting materials intimately and essentially homogeneously mixed. The spray-dried particles appear to have the same uniform composition regardless of their size. In general, each of the particles contains all of the starting materials in the same proportion. Desirably the volatile constituent in the slurry is water. The spray drying may take place preferably in air or preferably in an inert hot gas stream. A preferred hot drying gas is argon, though other inert gases may be used. The inlet gas stream is at an elevated temperature sufficient to remove a major portion of the water with a reasonable drier volume, for a desired rate of dry powder production and particle size. Air inlet temperature, atomize droplet size, and gas flow are factors which may be varied and affect the particle size of the spray dry product and the degree of drying. There may be typically be some water or solvent left in the spray dried material. For example, there may be up to 5 - 15% by weight water. It is preferred that the drying step reduce the moisture content of the material to less than 10% by weight. The amount of solvent removed depends on the flow rate, residence time of the solvent water particles, and contact with the heated air, and also depends on the temperature of the heated air.

Techniques for spray drying are well known in the art. In a non-limiting example, spray drying is carried out in a commercially available spray dryer such as an APV-Invensys PSD52 Pilot Spray Dryer. Typical operating conditions are in the following ranges: inlet temperature 250 - 350°C; outlet temperature: 100 - 120°C; feed rate: 4 - 8 liters (slurry) per hour.

Typically, the spray dried composition is the mulled and pelletized and then such pelletized product is fired (heated) to effect the reaction. However, it has now been found that such mulling and pelletizing steps can be eliminated if the heated (fired) spray dried composition is subsequently subjected to mechanofusion processing. Thus, in a preferred embodiment, electroactive materials are prepared by heating the spray dried powdered precursor composition as described above for a time and at a temperature sufficient to form a reaction product. The reaction mixture is heated in an oven, generally at a temperature of about 400°C or greater until a reaction product forms. When the starting materials contain hydroxyl for incorporation into the reaction product, the reaction temperature is preferably less than about 400°C and more preferably about 250°C or less.

The reaction may be carried out without redox or if desired under reducing or oxidizing conditions. When the reaction is done without redox, the oxidation state of the metal or mixed metals in the reaction product is the same as in the starting materials in the powdered precursor composition. Oxidizing conditions may be provided by heating the powder precursor composition in the presence of oxygen or air.

The reaction may also be carried out with reduction. For example the reaction may be carried out in a reducing atmosphere such as hydrogen, ammonia, methane, or a mixture of reducing gases. The reaction may also be carried out with reduction in the case where the powdered precursor composition contains a carbonaceous material as discussed above. In that situation, the powdered precursor composition contains a reductant that will participate in the reaction to reduce a transition metal, but that will produce by-products that will not interfere with the active material when used later in an electrode or an electrochemical cell. When the powdered precursor composition contains a reducing carbon, it is preferred to carry out the reaction in an inert atmosphere such as argon, nitrogen or carbon dioxide.

When the reaction is carried out under reducing conditions, the reducing agent is generally used in excess. In the case of reducing gases and reducing carbon, any excess reducing agent does not present a problem in the active materials. In the former case, the gas is volatile and is readily separated from the reaction mixture. In the latter, the excess carbon in the reaction product does not harm the properties of the active material, because carbon is generally added to the active material to form an electrode material for use in the electrochemical cells and batteries of the invention. Conveniently, the by-products carbon monoxide or carbon dioxide (in the case of a reducing carbon) or water (in the case of hydrogen) are readily removed from the reaction mixture.

The carbothermal reduction method of synthesis of mixed metal phosphates has been described in PCT Publication WO/01/53198, Barker et al., incorporated by reference herein. The carbothermal method may be used to react starting materials in the presence of reducing carbon to form a variety of products. The carbon functions to reduce a metal ion in the starting material metal M source. The reducing carbon, for example in the form of elemental carbon powder, is mixed with the other starting materials in the preparation of slurries of the invention, as discussed above. For best results, the temperature should be about 400°C or greater, and up to about 950°C. Higher temperatures may be used, but are usually not required.

The present invention also provides electrodes comprising an electrode active material made by the process of the present invention. In a preferred embodiment, the electrodes of the present invention comprise an electrode active material made by the process of this invention, a binder; and an electrically conductive carbonaceous material.

In a preferred embodiment, the electrodes of this invention comprise:
(a) from about 25% to about 95%, more preferably from about 50% to about 90%, electroactive material;
(b) from about 2% to about 95% electrically conductive material (e.g., carbon black); and
(c) from about 3% to about 20% binder chosen to hold all particulate materials in contact with one another without degrading ionic conductivity.
(Unless stated otherwise, all percentages herein are by weight.) Cathodes of this invention preferably comprise from about 50% to about 90% of electroactive material, about 5% to about 30% of the electrically conductive material, and the balance comprising binder. Anodes of this invention preferably comprise from about 50% to about 98% by weight of the electrically conductive material (e.g., a preferred graphite), with the balance comprising binder.

Electrically conductive materials among those useful herein include carbon black, graphite, powdered nickel, metal particles, conductive polymers (e.g., characterized by a conjugated network of double bonds like polypyrrole and polyacetylene), and mixtures thereof. Binders useful herein preferably comprise a polymeric material and extractable plasticizer suitable for forming a bound porous composite.

In a preferred process for making an electrode, the electrode active material is mixed into a slurry with a polymeric binder compound, a solvent, a plasticizer, and optionally the electroconductive material. The active material slurry is appropriately agitated, and then thinly applied to a substrate via a doctor blade. The substrate can be a removable substrate or a functional substrate, such as a current collector (for example, a metallic grid or mesh layer) attached to one side of the electrode film. In one embodiment, heat or radiation is applied to evaporate the solvent from the electrode film, leaving a solid residue. The electrode film is further consolidated, where heat and pressure are applied to the film to sinter and calendar it. In another embodiment, the film may be air-dried at moderate temperature to yield self-supporting films of copolymer composition. If the substrate is of a removable type it is removed from the electrode film, and further laminated to a current collector. With either type of substrate it may be necessary to extract the remaining plasticizer prior to incorporation into the battery cell.

### Batteries:

The batteries of the present invention comprise:
(a) a first electrode comprising an electroactive material of the present invention;
(b) a second electrode which is a counter-electrode to said first electrode; and
(c) an electrolyte between said electrodes.
The electrode active material of this invention may comprise the anode, the cathode, or both. Preferably, the electrode active material comprises the cathode.

The active material of the second, counter-electrode is any material compatible with the electrode active material of this invention. In embodiments where the electrode active material comprises the cathode, the anode may comprise any of a variety of compatible anodic materials well known in the art, including lithium, lithium alloys, such as alloys of lithium with aluminum, mercury, manganese, iron, zinc, and intercalation based anodes such as those employing carbon, tungsten oxides, and mixtures thereof. In a non-limiting preferred embodiment, the anode comprises:
(a) from about 0% to about 95%, preferably from about 25% to about 95%, more preferably from about 50% to about 90%, of an insertion material;
(b) from about 2% to about 95% electrically conductive material (e.g., carbon black); and
(c) from about 3% to about 20% binder chosen to hold all particulate materials in contact with one another without degrading ionic conductivity.

The batteries of this invention also comprise a suitable electrolyte that provides a physical separation but allows transfer of ions between the cathode and anode. The electrolyte is preferably a material that exhibits high ionic conductivity, as well as having insular properties to prevent self-discharging during storage. The electrolyte can be either a liquid or a solid. A liquid electrolyte contains comprises a solvent and an alkali metal salt that together form an ionically conducting liquid. So called "solid electrolytes" contain in addition a matrix material that is used to separate the electrodes.

The following non-limiting examples illustrate the compositions and methods of the present invention.

### EXAMPLE 1

### Preparation of LiFe_{.95}Mg_{.05}PO₄ (No Mechanofusion processing)

(1) LiH₂PO₄, Mg(OH)₂, Fe₂O₃ and Carbon Super P were wet ball mixed/milled in quantities sufficient to produce a commercial quantity of LiFe.₉₅Mg_{0.5}PO₄.
(2) The wet balled mixture was then spray dried.
(3) The spray dried composition was the subjected to mulling.
(4) The mulled product was then pelletized.
(5) The pellet was subjected to heating at 750°C for 4 hours.
(6) The pellet was then jaw crushed and Prater or jet milled.
(7) The reaction product of Step (6) was then subjected to continuous vibration sieving.
(8) The product was vacuum dried.

### EXAMPLE 2

### Preparation of LiFe.₉₅Mg_{.05}PO₄ (Streamlined processing)

The product was prepared as in Example 1 eliminating Steps 3 and 4.

### EXAMPLE 3

### Mechanofusion processing of LiFe_{.95}Mg_{.05}PO₄

10.0 kg of the composition produced in Example 2 was subjected to mechanofusion using an AMS-30F mixer commercially available from Hosokawa Micron Corporation. The press head was set at SS/5mm. Scraper WC/1mm. Water cooling at 20 (I/min). Purge gas - none. The revolution speed was set at 2000 rpm and mechanofusion processing continued for 30 minutes. 8.21 kg of mechanofused powder was recovered.

The starting composition had a bulk density of 0.519 g/ml and the finished product had a bulk density of 0.663 g/ml. The starting composition had a tap density of 1.099 g/ml and the finished product had a tap density of 1.356 g/ml. The starting composition had an average particle size (D50) 3.736 microns and the finished product had an average particle size (D50) of 2.819 microns.

### EXAMPLE 4

### Mechanofusion processing of LiFe_{.95}Mg_{.05}PO₄

10.0 kg of the composition produced in Example 2 was subjected to mechanofusion using an AMS-30F mixer commercially available from Hosokawa Micron Corporation. The press head was set at SS/5mm. Scraper WC/1mm. Water cooling at 20 (I/min). Purge gas - none. The revolution speed was set at 1800 rpm and mechanofusion processing continued for 20 minutes. 9.20 kg of mechanofused powder was recovered.

The starting composition had a bulk density of 0.502 g/ml and the finished product had a bulk density of 0.709 g/ml. The starting composition had a tap density of 1.035 g/ml and the finished product had a tap density of 1.496 g/ml. The starting composition had an average particle size (D50) 3.794 microns and the finished product had an average particle size (D50) 3.006 microns.

### EXAMPLE 5

### Mechanofusion processing of LiFe_{.95}Mg_{.05}PO₄

10.0 kg of the composition produced in Example 2 was subjected to mechanofusion using an AMS-30F mixer commercially available from Hosokawa Micron Corporation. The press head was set at SS/5mm. Scraper WC/1mm. Water cooling at 20 (I/min). Purge gas - none. The revolution speed was set at 1905 rpm and mechanofusion processing continued for 20 minutes. 9.20 kg of mechanofused powder was recovered.

The starting composition had a bulk density of 0.503 g/ml and the finished product had a bulk density of 0.734 g/ml. The starting composition had a tap density of 1.049 g/ml and the finished product had a tap density of 1.446 g/ml. The starting composition had an average particle size (D50) 3.910 microns and the finished product had an average particle size (D50) 3.485 microns.

### EXAMPLE 6

### Mechanofusion processing of LiFe_{.95}Mg_{.05}PO₄

10.0 kg of the composition produced in Example 2 was subjected to mechanofusion using an AMS-30F mixer commercially available from Hosokawa Micron Corporation. The press head was set at SS/5mm. Scraper WC/1mm. Water cooling at 20 (I/min). Purge gas - none. The revolution speed was set at 1900 rpm and mechanofusion processing continued for 20 minutes. 9.10 kg of mechanofused powder was recovered.

The starting composition had a bulk density of 0.499 g/ml and the finished product had a bulk density of 0.714 g/ml. The starting composition had a tap density of 1.058 g/ml and the finished product had a tap density of 1.455 g/ml. The starting composition had an average particle size (D50) 4.005 microns and the finished product had an average particle size (D50) 3.199 microns.

### EXAMPLE 7

### Mechanofusion processing of LiFe.₉₅Mg_{.05}PO₄

500g of the composition produced in Example 2 was subjected to mechanofusion using an AMS-Lab mixer commercially available from Hosokawa Micron Corporation. The press head was set at SS/5mm. Scraper WC/1mm. Water cooling at 2 (I/min). Purge gas - none. The revolution speed was set at 2655 rpm and mechanofusion processing continued for 30 minutes. 390.6 g of mechanofused powder was recovered.

The starting composition had a bulk density of 0.519 g/ml and the finished product had a bulk density of 0.575 g/ml. The starting composition had a tap density of 0.937 g/ml and the finished product had a tap density of 1.337 g/ml. The starting composition had an average particle size (D50) 2.595 microns and the finished product had an average particle size (D50) 2.462 microns.

### EXAMPLE 8

### Mechanofusion processing of LiFe_{.95}Mg_{.05}PO₄

500 g of the composition produced in Example 2 was subjected to mechanofusion using an AMS-Lab mixer commercially available from Hosokawa Micron Corporation. The press head was set at SS/5mm. Scraper WC/1mm. Water cooling at 2 (I/min). Purge gas - none. The revolution speed was set at 2098 rpm and mechanofusion processing continued for 20 minutes. 390.6 g of mechanofused powder was recovered.

The starting composition had a bulk density of 0.519 g/ml and the finished product had a bulk density of 0.654 g/ml. The starting composition had a tap density of 0.937 g/ml and the finished product had a tap density of 1.255 g/ml. The starting composition had an average particle size (D50) 2.595 microns and the finished product had an average particle size (D50) 2.350 microns.

### EXAMPLE 9

### Mechanofusion processing of LiFe_{.95}Mg_{.05}PO₄

The composition produced in Example 1 was subjected to mechanofusion using an AMS-30F mixer commercially available from Hosokawa Micron Corporation as described in Example 3-8..

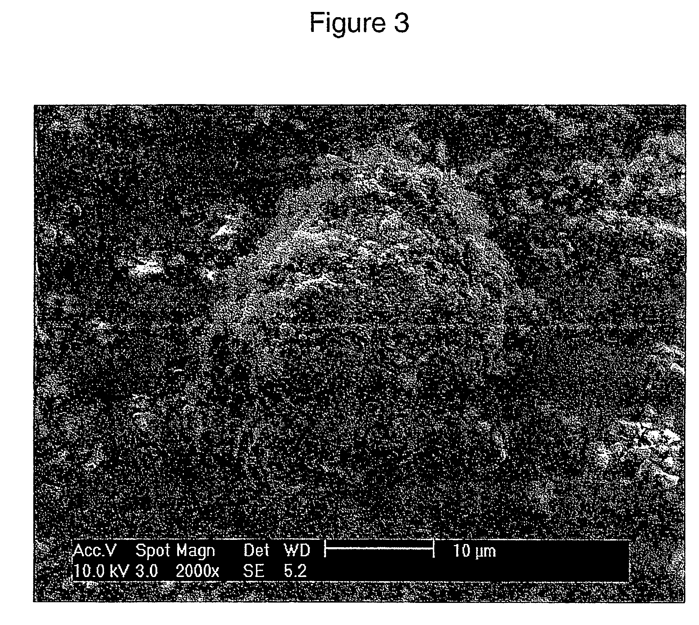

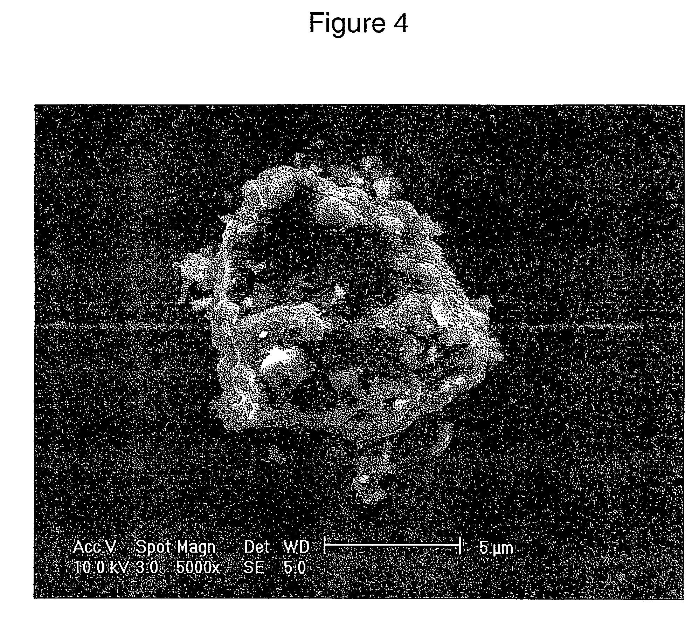

Figure 3 shows SEM imaging of the porous powder produced in Example 1 (2000x) (no mechanofusion of AMS processing). Figure 4 shows (image) of the dense powder produced after AMS processing (5000x).

Table 1 shows the tap densities of various powder produced by the methodologies given in the Examples. It can be seen therefrom that the AMS (mechnofusion) processed powders give higher density powders.

**Table 1**

| **Sample** | | **Tap D. - g/ml** | **True D. - g/cm³** | **Carbon %** |
|---|---|---|---|---|
| Example 1 | Before AMS | 1.06 | 3.445 | 6.468 |
| | After AMS | 1.36 | 3.400 | 6.480 |
| Example 1 | Before AMS | 1.03 | 3.408 | 6.503 |
| | After AMS | 1.45 | 3.386 | 6.431 |
| Examples 2 | Before AMS | 0.97 | 3.410 | 6.378 |
| | After AMS | 1.54 | 3.380 | 6.357 |

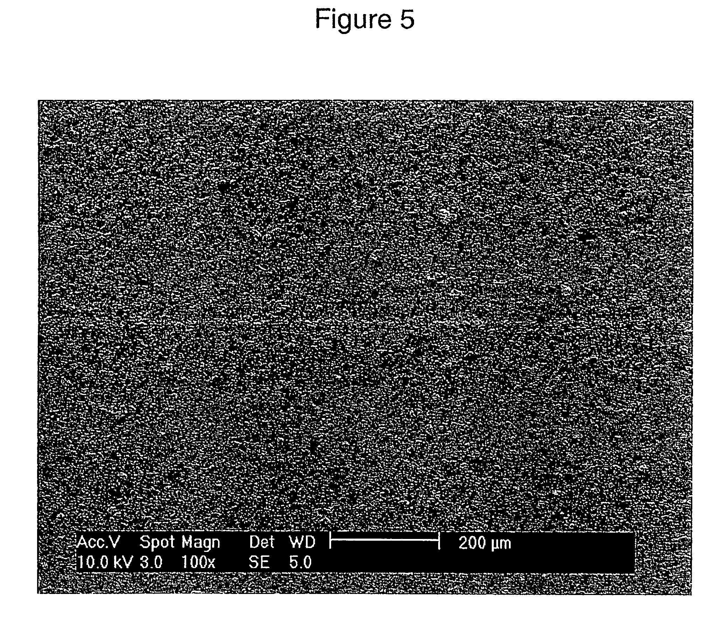

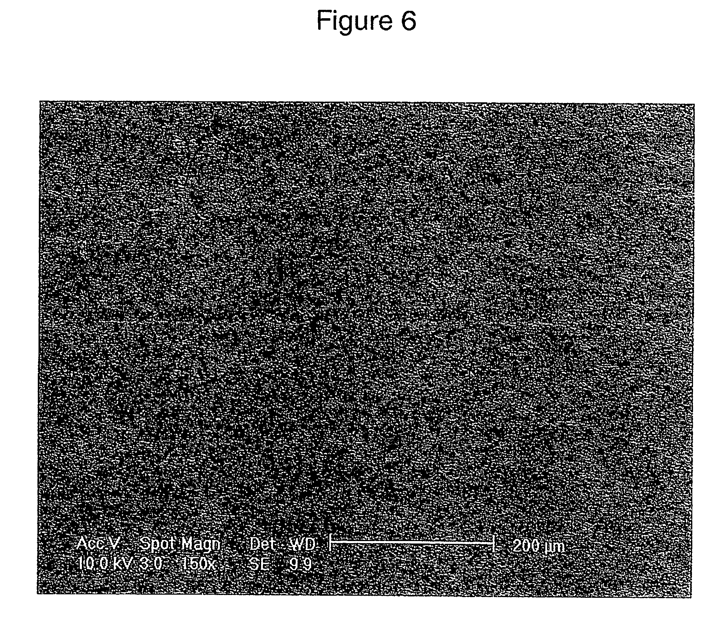

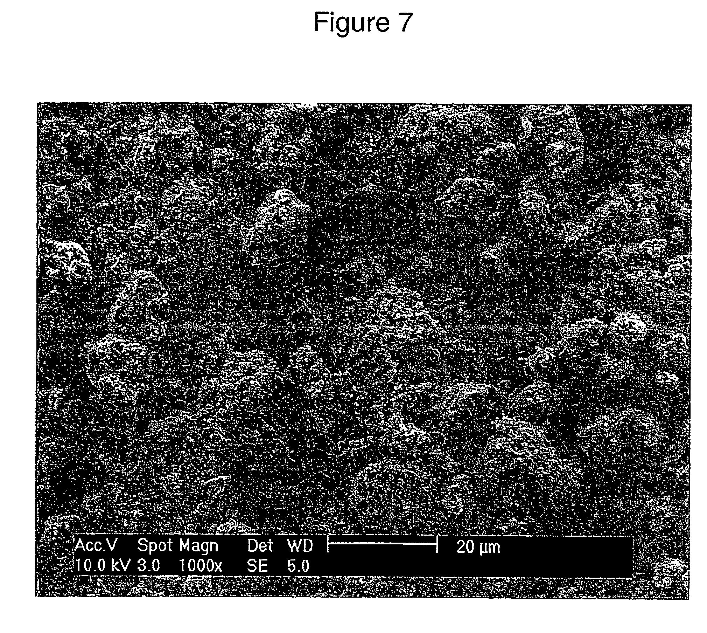

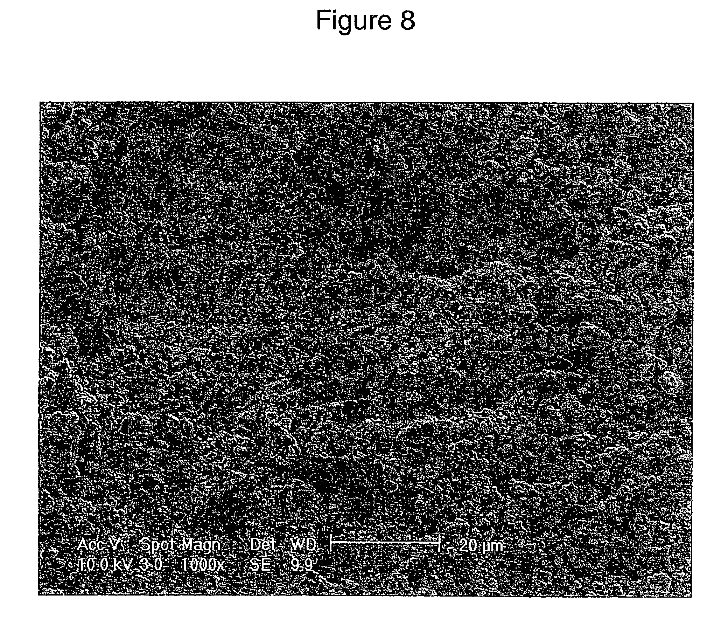

Electrode films were made according to the methodology described above. Figure 5 shows the SEM imaging of the rough/porous film produced with powder that had no AMS (mechanofusion) processing (100x). Figure 6 shows the SEM imaging of the smooth/dense film produced with powder that had AMS (mechanofusion) processing (150x). Figure 7 shows the SEM imaging of the rough/porous film produced with powder that had no AMS (mechanofusion) processing (1000x). Figure 8 shows the SEM imaging of the rough/porous film produced with powder that had AMS (mechanofusion) processing (1000x).

Table 2 shows the characteristic of a film produced with powder that had no AMS (mechanofusion) processing prepared as in Example 1. It shows the characteristics of a film produced with a powder that was prepared using the full process methodology and then subjecting to AMS (mechanofusion) processing (Example 9). Finally it shows the characteristics of a film produced with powder produced by the streamlined process and then subjected to AMS (mechanofusion) processing (such as in Example 3).

**Table 2**

| **Sample ID** | **Coating Weight (mg/cm2)** | **Solid Content (%)** | **Viscosity (cps)** | **Charge (mAh/g)** | **Discharge (mAh/g)** |
|---|---|---|---|---|---|
| Example 1 | 12.8 | 57.00% | 3055 | 157.5 | 137.1 |
| Example 9 | 14.8 | 61.30% | 3620 | 156.4 | 138.7 |
| Example 3 | 14.7 | 61.30% | 3595 | 154.6 | 144.8 |

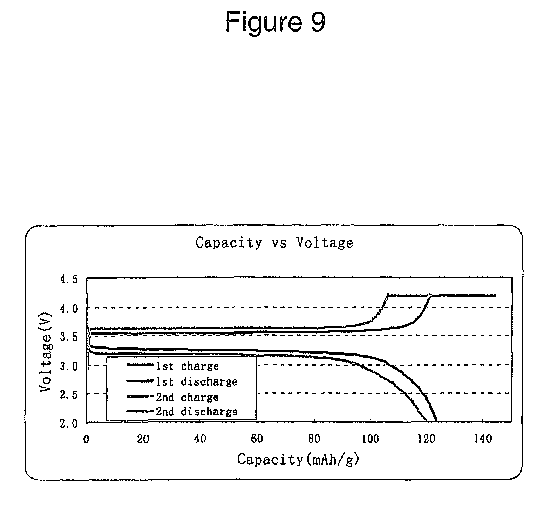

Coin cells were produced using the films produce with the AMS processed powder according to known methodology. The capacity vs. voltage is shown in Figure 9 and the charge/discharge data for such cells is given in Table 3.

**Table 3**

| **Cycle Number** | **Charge (mAh)** | **Discharge (mAh)** | **Charge (mAh/g)** | **Discharge (mAh/g)** | **Efficient (%)** |
|---|---|---|---|---|---|
| 1 | 1.687 | 1.423 | 149.2 | 125.9 | 84.4% |
| 2 | 1.447 | 1.397 | 128.0 | 123.6 | 96.6% |
| 3 | 1.404 | 1.331 | 124.2 | 117.8 | 94.8% |

The examples and other embodiments described herein are exemplary and not intended to be limiting in describing the full scope of compositions and methods of this invention. Equivalent changes, modifications and variations of specific embodiments, materials, compositions and methods may be made within the scope of the present invention, with substantially similar results.

## Claims

1. A metal phosphate or mixed metal phosphate composition produced by subjecting said composition to compressive and shearing forces to produce a metal phosphate or mixed metal phosphate composition **characterized by** a higher tap density.

2. A metal phosphate or mixed metal phosphate composition according to claim 1 wherein the phosphate is of the nominal general formula
AₐM_{b}(PO₄)_{c}Z_{d}
wherein A is an alkali metal or mixture of alkali metals, M comprises at least one transition metal capable of undergoing oxidation to a higher oxidation state than in the general formula, Z is selected from the group consisting of halogen, hydroxide, and combinations thereof, a, b, and c are greater than zero and d is zero or greater.

3. A metal phosphate or mixed metal phosphate composition according to claim 2 wherein the phosphate is of the nominal general formula general formula
LiₐM_{b}PO₄

4. A metal phosphate or mixed metal phosphate composition according to claim 1 wherein the phosphate is of the nominal general formula
LiₐM_{b}(PO₄)Z_{d},
wherein
(a) 0.1 < a ≤ 4;
(b) M is M'₁₋ₘM"ₘ, where M' is at least one transition metal from Groups 4 to 11 of the Periodic Table; M" is at least one element which is from Group 2, 12, 13, or 14 of the Periodic Table, 0 < m < 1, and 1 ≤ b ≤ 3; and
(c) Z comprises halogen, and 0 ≤ d ≤ 4, preferably 0.1 ≤ d ≤ 4; wherein M, Z, a, b, and d are selected so as to maintain electroneutrality of said compound.

5. A metal phosphate or mixed metal phosphate composition according to claim 1 wherein the phosphate is of the nominal general formula
A₂M(PO₄)Z_{d},
wherein
(d) A is selected from the group consisting of Li, Na, K, and mixtures thereof,
(e) M is M'_{1-b}M"_{b}, where M' is at least one transition metal from Groups 4 to 11 of the Periodic Table; and M" is at least one element which is from Group 2, 3, 12, 13, or 14 of the Periodic Table, and 0 < b < 1; and
(f) Z comprises halogen, and 0 < d < 2, preferably 0.1 < d < 2; and
wherein M, Z, b, and d are selected so as to maintain electroneutrality of said compound.

6. A mixed metal phosphate according to claim 1 wherein the mixed metal phosphate is of the nominal general formula LiFe₁₋ₓMₓPO₄ wherein x is less than or equal to about 0.15 and greater than or equal to about 0.01

7. A mixed metal phosphate according to claim 6 of the formula LiFe_{.95}Mg_{.05}PO₄.

8. An electrode or electrode film produced with the higher tap density composition of claim 1.

9. An electrode or electrode film produced with the higher tap density composition of claim 2.

10. An electrode or electrode film produced with the higher tap density composition of claim 3.

11. An electrode or electrode film produced with the higher tap density composition of claim 4.

12. An electrode or electrode film produced with the higher tap density composition of claim 5.

13. An electrode or electrode film produced with the higher tap density composition of claim 6.

14. An electrode or electrode film produced with the higher tap density composition of claim 7.

15. A battery comprising the electrode or electrode film according to claim 8.

16. A battery comprising the electrode or electrode film according to claim 9.

17. A battery comprising the electrode or electrode film according to claim 10.

18. A battery comprising the electrode or electrode film according to claim 11.

19. A battery comprising the electrode or electrode film according to claim 12.

20. A battery comprising the electrode or electrode film according to claim 13.

21. A battery comprising the electrode or electrode film according to claim 14.
